# EUROPÄISCHE PATENTSCHRIFT

(11) **EP 3 025 831 B1**
(45) Veröffentlichungstag und Bekanntmachung des Hinweises auf die Patenterteilung: **11.10.2017**
(21) Anmeldenummer: 15193170.6
(22) Anmeldetag: 05.11.2015
(51) Int. Cl.: B25J 21/02, B08B 15/02, B29C 67/00

(54) **WERKSTOFFPULVER VERARBEITENDE MASCHINE, INSBESONDERE PULVERUMSCHMELZMASCHINE, MIT EINER VORRICHTUNG ZUR AUSBRINGUNG VON WERKSTOFFPULVER AUS EINEM NACH AUSSEN GESCHLOSSENEN PROZESSRAUM**
MATERIAL POWDER PROCESSING MACHINE, IN PARTICULAR POWDER MELTING MACHINE, WITH A DEVICE FOR THE EXTRACTION OF MATERIAL POWDER FROM AN OUTWARDLY CLOSED PROCESS CHAMBER
MACHINE DE TRAITEMENT DE POUDRE, EN PARTICULIER MACHINE DE FUSION DE POUDRE, DOTEE D'UN DISPOSITIF DESTINE A ENLEVER LA POUDRE PROVENANT D'UNE SALLE DE PROCESSUS FERMEE VERS L'EXTERIEUR

(30) Priorität: 25.11.2014 DE 202014009347 U
(43) Veröffentlichungstag der Anmeldung: 01.06.2016
(73) Patentinhaber: Realizer GmbH, 33178 Borchen (DE)
(72) Erfinder: Fockele, Matthias, 33178 Borchen (DE)
(74) Vertreter: Tiesmeyer, Johannes

(56) Entgegenhaltungen:
- WO-A2-2006/024373
- DE-A1- 2 408 072
- DE-U1-202011 051 757
- US-A- 5 536 077

## Beschreibung

Die Erfindung betrifft eine Werkstoffpulver verarbeitende Maschine, insbesondere Pulverumschmelzmaschine, mit einem nach außen geschlossenen Prozessraum und mit einer Vorrichtung zur Ausbringung von Werkstoffpulver aus dem Prozessraum.

Eine solche Maschine ist aus der EP 2 052 845 B1 bekannt. In der EP 2 052 845 B1 ist eine Pulverumschmelzmaschine beschrieben, die nach dem Prinzip des selektiven Laserschmelzens funktioniert und zur Herstellung von Formkörpern durch schichtweises Aufbauen aus Werkstoffpulver dient. Die bekannte Maschine umfasst ein Prozessraumgehäuse, eine Schutzgaszuleitungs- und -Ableitungseinrichtung zur Erzeugung und Aufrechterhaltung einer Schutzgasatmosphäre in dem Prozessraum, einen Träger für den Schichtaufbau, eine Bestrahlungseinrichtung zur Bestrahlung der jeweils auf dem Träger präparierten Werkstoffpulverschicht in einem dieser Schicht zugeordneten Querschnittsbereich des Modells des Formkörpers mit einer fokussierten Laserstrahlung, die das Werkstoffpulver in diesem Querschnittsbereich durch Erhitzen zum Verschmelzen oder ggf. zum Versintern bringt, und eine Pulverschichtpräparierungseinrichtung zur Präparierung der jeweils folgenden Werkstoffpulverschicht auf der zuletzt bestrahlten oder aufgetragenen Schicht. Die Schutzgaszuleitungs- und -Ableitungseinrichtung ist mit einem an einem Schutzgasabsauganschluss einer Pumpe angeschlossenen und in den Prozessraum hineinragenden Saugrüssel zum Absaugen von Schutzgas und/oder von Werkstoffpulver aus dem Prozessraum ausgestattet, wobei in einer Verbindungsleitung zwischen dem Saugrüssel und der Pumpe eine Pulver aus dem abgesaugten Medium abscheidende Filtereinrichtung vorgesehen ist. Der Saugrüssel ist flexibel und von außen handhabbar. Hierzu weist das Prozessraumgehäuse eine Durchgriffsöffnung auf, die von einem in den Prozessraum einzustülpenden Handschuh an ihrem Öffnungsrand abgedichtet ist. Eine Bedienungsperson kann mit einer Hand durch die Durchgriffsöffnung hindurch in den Handschuh einschlüpfen und den gesondert von dem Handschuh im Prozessraum befindlichen Saugrüssel zunächst ergreifen und dann ggf. nahe an abzusaugendes Pulver in dem Prozessraum heranführen. Die Pulverrückgewinnungseinrichtung wie auch der Prozessraum, sind in einem Schutzgaskreislauf integriert, welcher Filterelemente und Pulverabscheider enthält.

Ein gewisser Nachteil wurde bei einer Vorrichtung gemäß EP 2 052 845 B1 darin gesehen, dass die Bedienungsperson den Saugrüssel jeweils erst in dem Prozessraum auffinden und ergreifen muss, bevor sie mit der Pulverabsaugung beginnen kann.

Gegenstand der vorliegenden Erfindung ist es, diesen Nachteil insbesondere bei Vorrichtungen und Maschinen der in der EP 2 052 845 B1 beschriebenen Art zu beseitigen.

Hierzu wird erfindungsgemäß vorgeschlagen:
Eine Werkstoffpulver verarbeitende Maschine, insbesondere Pulverumschmelzmaschine, die nach dem Prinzip des selektiven Laserschmelzens funktioniert, mit einem nach außen geschlossenen Prozessraum und einer Vorrichtung zur Ausbringung von Werkstoffpulver aus dem Prozessraum, wobei die Maschine ein den Prozessraum enthaltendes Prozessraumgehäuse mit einer Durchgriffsöffnung in einer Wand des Prozessraumgehäuses und einen die Durchgriffsöffnung an deren Öffnungsrand nach außen abdichtenden, in den Prozessraum hineinreichenden Handhabungsbeutel umfasst, in den eine Bedienungsperson durch die Durchgriffsöffnung hindurch eingreifen kann, wobei an dem Handhabungsbeutel ein Ansaugelement angebracht ist, welches an einer aus dem Prozessraum führenden Gas- und Pulverabsaugleitung angeschlossen oder anschließbar ist.

Der Handhabungsbeutel und das Ansaugelement sind miteinander verbunden, so dass eine Bedienungsperson lediglich von außen durch die Durchgriffsöffnung hindurch in den Handhabungsbeutel eingreifen muss, um das Ansaugelement oder einen nahe daran befindlichen Teil der Gas- und Pulverabsaugleitung zu ertasten und zu erfassen. Dazu ist es nicht erforderlich, den Handhabungsbeutel handschuhartig mit Fingerlingen auszubilden, wenngleich dies in speziellen Ausgestaltungen der Erfindung durchaus der Fall sein könnte. Die Bedienungsperson kann mit ihrer Hand das Ansaugelement zu verschiedenen Stellen in dem Prozessraum führen, um Pulver und Gas abzusaugen.

Vorzugsweise handelt es sich bei der Werkstoffpulver verarbeitenden Maschine um eine Pulverumschmelzmaschine, die nach dem Prinzip des selektiven Laserschmelzens funktioniert, eine Pulversintermaschine oder ggf. eine Pulversieb- und Filtermaschine oder dgl. Bei solchen Maschinen ist es häufig sinnvoll oder sogar notwendig, das Pulver unter weitgehendem Ausschluss von Luftsauerstoff zu handhaben. Dies ist unter Nutzung der vorliegenden Erfindung in einer erleichterten Weise möglich.

Gemäß einer Weiterbildung der Erfindung umfasst die Gas- und Pulverabsaugleitung einen in oder an dem Handhabungsbeutel verlaufend angebrachten biegsamen Schlauch, wobei die Anordnung derart getroffen ist, dass der Schlauch von einer von außen in den Handhabungsbeutel eingeführten Hand einer Bedienungsperson ergriffen und in dem Prozessraum bewegt werden kann, um das Ansaugelement zu verschiedenen Stellen in dem Prozessraum zu führen. Ein solcher Schlauch kann durch den Handhabungsbeutel verlaufen. Er kann jedoch andererseits im Prozessraum an den Handhabungsbeutel herangeführt und dort an dem Pulveransaugelement angeschlossen sein.

Der Handhabungsbeutel kann gemäß einer Weiterbildung der Erfindung auch mit einer an einer Gaszuführleitung angeschlossenen oder anschließbaren Blasdüse zum Einblasen von Gas unter Druck in den Prozessraum versehen sein. Das eingeblasene Gas kann zur Auflockerung von Werkstoffpulver dienen, um dieses mit dem Ansaugelement leichter absaugen zu können. Erfindungsgemäß weist das Prozessraumgehäuse eine weitere Durchgriffsöffnung in einer seiner Wände auf, wobei die weitere Durchgriffsöffnung an deren Öffnungsrand mittels eines in den Prozessraum hineinreichenden weiteren Handhabungsbeutel nach außen abgedichtet ist, in den eine Bedienungsperson durch die weitere Durchgriffsöffnung hindurch eingreifen kann, wobei an dem weiteren Handhabungsbeutel wenigstens eine, an einer Gaszuführleitung angeschlossene oder anschließbare Blasdüse zum Einblasen von Gas unter Druck in den Prozessraum angebracht ist. In diesem Fall kann die Bedienungsperson zweihändig arbeiten, indem sie mit einer Hand die Blasdüse zu einer gewünschten Stelle in dem Prozessraum führt, etwa um Werkstoffpulver zu lockern, wohingegen sie mit der anderen Hand das Pulveransaugelement zu einer entsprechend gewünschten Stelle in dem Prozessraum führen kann um das aufgelockerte Werkstoffpulver abzusaugen. Zum sofortigen Auffinden durch Ertasten der Blasdüse und des Ansaugelementes bzw. daran angeschlossener Leitungsstücke, braucht die Bedienungsperson lediglich ihre Hände in die betreffenden Handhabungsbeutel einführen. Einer oder beide Handhabungsbeutel können bereichsweise als Handschuhe ausgebildet sein.

Auch die Gaszuführleitung kann einen in oder an dem weiteren Handhabungsbeutel verlaufend angebrachten biegsamen weiteren Schlauch umfassen, wobei die Anordnung derart getroffen ist, dass der weitere Schlauch von einer von außen in den weiteren Handhabungsbeutel eingeführten Hand einer Bedienungsperson ergriffen und in dem Prozessraum bewegt werden kann, um die Blasdüse zu verschiedenen Stellen in dem Prozessraum zu führen. Vorzugsweise ist der weitere Schlauch zumindest abschnittsweise in dem weiteren Handhabungsbeutel aufgenommen.

In einer Variante der Erfindung könnte anstelle oder zusätzlich zu der Blasdüse ein mechanisches Lockerungswerkzeug, wie z.B. eine Pulverlockerungsbürste oder ein Spatel oder dgl. an dem weiteren Handhabungsbeutel angebracht sein. Ein solches mechanisches Lockerungswerkzeug könnte zusätzlich zu dem Ansaugelement auch an dem ersteren Handhabungsbeutel angebracht sein.

Bei einer weiteren Variante könnte der weitere Handhabungsbeutel lediglich als Handschuh ohne Blasdüse ausgebildet sein.

Gemäß einer besonders bevorzugten Ausführungsform der Erfindung sind die Gas- und Pulverabsaugleitung und die Gaszuführleitung Elemente eines Förderkreislaufs, der wenigstens eine Förderpumpe und eine Pulverabscheideeinrichtung zum Abscheiden von Werkstoffpulver aus dem Förderkreislauf aufweist. Ein derartiger Förderkreislauf ist z.B. in der EP 2 052 845 B1 erläutert.

In dem Förderkreislauf ist als Gas vorzugsweise ein Inertgas, z.B. Argon, enthalten.

Die Erfindung wird nachstehend unter Bezugnahme auf die Figuren erläutert.
- Figur 1: zeigt in einer perspektivischen Darstellung eine Werkstoffpulver verarbeitende Maschine, nämlich eine Pulverumschmelzmaschine.
- Figur 2: zeigt in stark vereinfachter und schematisierter Darstellung einen Blick von oben in den Prozessraum der Maschine aus Figur 1, wobei eine Situation gezeigt ist, in der Pulver aus dem Prozessraum abgesaugt wird.

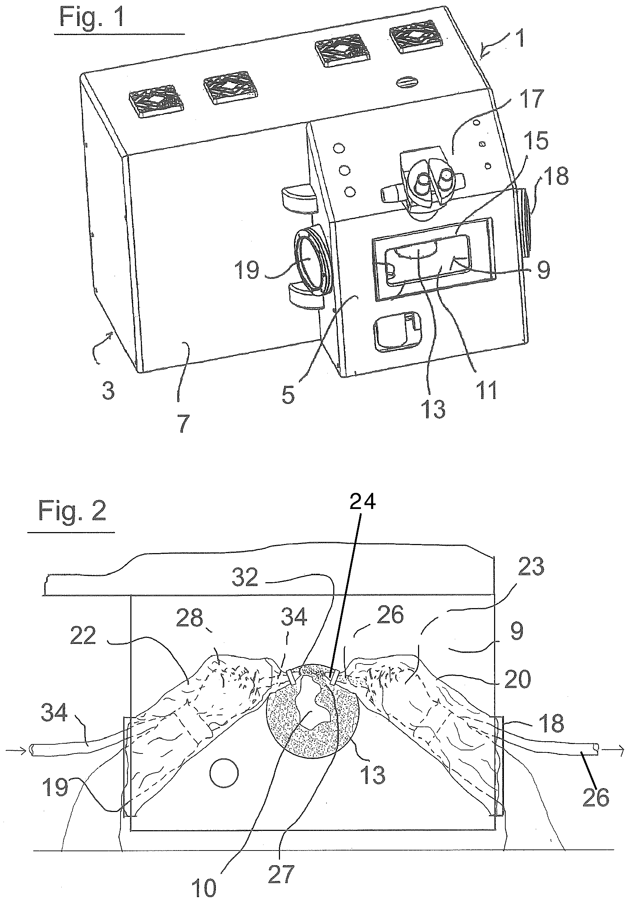

Eine Pulverumschmelzmaschine der in Figur 1 dargestellten Art ist in ihrer grundsätzlichen Funktionsweise in der EP 2 052 845 B1 beschrieben. Mittels einer solchen Pulverumschmelzmaschine können Formkörper durch schichtweises Aufbauen aus Werkstoffpulver in jeweiligen Bauprozessen hergestellt werden. Bei diesen Bauprozessen fällt üblicherweise nicht benötigtes Restpulver an, welches zu entfernen und ggf. zur weiteren Nutzung aufzufangen ist.

Die Pulverumschmelzmaschine 1 weist ein Gehäuse 3 mit einem Prozessraumabteil oder Prozessraumgehäuse 5 und einem Versorgungsabteil 7 auf. In dem Prozessraumabteil 5 befindet sich der Prozessraum 9 mit seinem Prozessraumboden 11 und der darin eingelassenen Bauplattform 13, wie dies durch das Sichtfenster 15 in der vorderen Gehäusewand des Prozessraumabteils 5 zu erkennen ist. Ein Stereomikroskop 17 kann genutzt werden, um den Bauprozess des selektiven Laserschmelzens zu beobachten und/oder die Einstellung bestimmter Parameter zu prüfen. In den einander entgegengesetzten Seitenwänden des Prozessraumabteils 5 sind Durchgriffsöffnungen 18, 19 vorgesehen, die von einem daran angebrachten Handhabungsbeutel 20 bzw. 22 (Figur 2) nach außen hin abgedichtet sind. Während eines Bauprozesses eines Formkörpers in dem Prozessraum 9 herrscht im Prozessraum vorzugsweise Schutzgasatmosphäre.

Um Restpulver 27 nach Fertigstellung eines Formkörpers 10 aus dem Prozessraum 9 unter Vermeidung des Öffnens des Prozessraums 9 zu entfernen, ist an dem Handhabungsbeutel 20 ein Ansaugelement 24 befestigt, welches an einer schlauchförmigen Gas- und Pulverabsaugleitung 26 angeschlossen ist, die in dem Handhabungsbeutel 20 verläuft und im Beispielsfall außerhalb des Prozessraumgehäuses 5 an einer Pulverabscheide- und Gasfördereinrichtung (nicht gezeigt) saugseitig angeschlossen ist. Wie in Figur 2 angedeutet, kann eine Bedienungsperson mit einer Hand 23 durch die Durchgriffsöffnung 18 hindurch in den Handhabungsbeutel 20 eingreifen und den Gas- und Pulverabsaugschlauch 26 in der Nähe des Ansaugelementes 24 ergreifen und dann auf diese Weise das Ansaugelement 24 zu verschiedenen Stellen in dem Prozessraum 9 führen, um Restpulver 27 abzusaugen.

Um Restpulver 27 aufzulockern ist eine Blasdüse 32 vorgesehen. Die Blasdüse 32 ist an dem weiteren Handhabungsbeutel 22 befestigt und kann ebenfalls mittels einer Hand 28 einer Bedienungsperson zu verschiedenen Stellen in dem Prozessraum 9 geführt werden. Die Blasdüse 32 ist an einer Gaszuführleitung 34 angeschlossen, die im Beispielsfall ebenfalls ein biegsamer Schlauch ist, der in dem weiteren Handhabungsbeutel 22 verlaufend zu der Blasdüse 32 geführt ist. Die Bedienungsperson kann diesen Schlauch 34 bequem erfassen und somit die Blasdüse 32 bewegen.

Nicht gezeigt ist in Figur 2 eine Druckgasquelle, welche Gas z.B. Argon unter Druck in die Gaszuführleitung 34 einbringt.

Gemäß einer bevorzugten Ausführungsform sind die Gas- und Pulverabsaugleitung 26 und die Gaszuführleitung 34 Elemente eines Förderkreislaufs, der wenigstens eine Förderpumpe und eine Pulverabscheideeinrichtung zum Abscheiden von Werkstoffpulver aus dem Förderkreislauf aufweist.

## Patentansprüche

1. Werkstoffpulver verarbeitende Maschine (1) mit einem nach außen geschlossenen Prozessraum (9) und einer Vorrichtung zur Ausbringung von Werkstoffpulver aus dem Prozessraum (9),
umfassend ein den Prozessraum (9) enthaltendes Prozessraumgehäuse (5) mit einer Durchgriffsöffnung (18) in einer Wand des Prozessraumgehäuses (5) und mit einer weiteren Durchgriffsöffnung (19) in einer der Wände der Prozessraumgehäuses (5) und einen die Durchgriffsöffnung (18) an deren Öffnungsrand nach außen abdichtenden, in den Prozessraum (9) hineinreichenden Handhabungsbeutel (20), in den eine Bedienungsperson durch die Durchgriffsöffnung hindurch eingreifen kann, wobei die weitere Durchgriffsöffnung (19) an deren Öffnungsrand mittels eines in den Prozessraum (9) hineinreichenden weiteren Handhabungsbeutel (22) nach außen abgedichtet ist, in den eine Bedienungsperson durch die weitere Durchgriffsöffnung (19) hindurch eingreifen kann, **dadurch gekennzeichnet, dass** an dem Handhabungsbeutel (20) ein Ansaugelement (24) angebracht ist, welches an einer aus dem Prozessraum (9) führenden Gas- und Pulverabsaugleitung (26) angeschlossen oder anschließbar ist, wobei an dem weiteren Handhabungsbeutel (22) wenigstens eine, an einer Gaszuführleitung (34) angeschlossene oder anschließbare Blasdüse (32) zum Einblasen von Gas unter Druck in den Prozessraum (9) angebracht ist.

2. Maschine nach Anspruch 1, wobei die Gas- und Pulverabsaugleitung (26) einen in oder an dem Handhabungsbeutel (20) verlaufend angebrachten biegsamen Schlauch umfasst, wobei die Anordnung derart getroffen ist, dass der Schlauch von einer von außen in den Handhabungsbeutel (20) eingeführten Hand (23) einer Bedienungsperson ergriffen und in dem Prozessraum (9) bewegt werden kann, um das Pulveransaugelement (24) zu verschiedenen Stellen in dem Prozessraum (9) zu führen.

3. Maschine nach Anspruch 1, wobei die Gaszuführleitung (34) einen in oder an dem weiteren Handhabungsbeutel (22) verlaufend angebrachten biegsamen weiteren Schlauch umfasst, wobei die Anordnung derart getroffen ist, dass der weitere Schlauch von einer von außen in den weiteren Handhabungsbeutel eingeführten Hand (28) einer Bedienungsperson ergriffen und in dem Prozessraum (9) bewegt werden kann, um die Blasdüse (32) zu verschiedenen Stellen in dem Prozessraum (9) zu führen.

4. Maschine nach einem der vorhergehenden Ansprüche, wobei an dem weiteren Handhabungsbeutel prozessraumseitig ein mechanisches Pulverauflockerungswerkzeug angebracht ist.

5. Maschine nach einem der vorhergehenden Ansprüche, wobei die Gas- und Pulverabsaugleitung (26) und die Gaszuführleitung (34) Elemente eines Förderkreislaufs sind, der wenigstens eine Förderpumpe und eine Pulverabscheideeinrichtung zum Abscheiden von Werkstoffpulver aus dem Förderkreislauf aufweist.

6. Maschine nach Anspruch 5, wobei als Gas in dem Förderkreislauf und in dem Prozessraum ein Schutzgas, vorzugsweise Argon enthaltendes Schutzgas, vorgesehen ist.

## Claims

1. Powder material processing machine (1) comprising a processing chamber (9) that is closed from the outside and a device for the output of powder material from the processing chamber (9), said machine comprising a processing chamber housing (5) which contains the processing chamber (9) and comprises a reach-through opening (18) in one wall of the processing chamber housing (5), a further reach-through opening (19) in one of the walls of the processing chamber housing (5), and a handling pouch (20) which seals the reach-through opening (18) from the outside at its opening edge and extends into the processing chamber (9), and which an operator can access through the reach-through opening, the further reach-through opening (19) being sealed from the outside at its opening edge by means of a further handling pouch (22) which extends into the processing chamber (9) and which an operator can access through the further reach-through opening (19), **characterised in that** a suction element (24) is attached to the handling pouch (20) and is or can be connected to a gas and powder suction line (26) which leads out of the processing chamber (9), at least one blower nozzle (32) which is or can be connected to a gas supply line (34) being attached to the further handling pouch (22) so as to blow gas into the processing chamber (9) in a pressurised manner.

2. Machine according to claim 1, wherein the gas and powder suction line (26) comprises a flexible tube which is attached such that it extends in or on the handling pouch (20), wherein the arrangement is such that the tube can be gripped and moved in the processing chamber (9) by an operator's hand (23) which is inserted from the outside into the handling pouch (20), in order to guide the powder suction element (24) into different positions in the processing chamber (9).

3. Machine according to claim 1, wherein the gas supply line (34) comprises a further flexible tube which is attached such that it extends in or on the further handling pouch (22), wherein the arrangement is such that the further tube can be gripped and moved in the processing chamber (9) by an operator's hand (28) which is inserted from the outside into the further handling pouch, in order to guide the blower nozzle (32) into different positions in the processing chamber (9).

4. Machine according to any of the preceding claims, wherein a mechanical powder loosening tool is attached to the further handling pouch on the processing chamber side.

5. Machine according to any of the preceding claims, wherein the gas and powder suction line (26) and the gas supply line (34) are elements of a conveying circuit which comprises at least one conveying pump and one powder separating device for separating powder material from the conveying circuit.

6. Machine according to claim 5, wherein a protective gas, preferably a protective gas containing argon, is provided as the gas in the conveying circuit and in the processing chamber.

## Revendications

1. Machine de traitement de poudres de matériau (1) comprenant une chambre de processus (9) fermée vers l'extérieur et un dispositif servant à déverser des poudres de matériau hors de la chambre de processus (9),
comprenant un boîtier de chambre de processus (5) contenant la chambre de processus (9), pourvu d'une ouverture de passage (18) dans une paroi du boîtier de chambre de processus (5) et pourvu d'une autre ouverture de passage (19) dans une des parois du boîtier de chambre de processus (5), et une poche de maniement (20) étanchéifiant vers l'extérieur l'ouverture de passage (18) au niveau du bord d'ouverture de cette dernière, parvenant dans la chambre de processus (9), dans lequel un opérateur peut intervenir en passant par l'ouverture de passage, dans laquelle l'autre ouverture de passage (19) est étanchéifiée vers l'extérieur au niveau de son bord d'ouverture au moyen d'un autre poche de maniement (22) parvenant dans la chambre de processus (9), dans lequel un opérateur peut intervenir en passant par l'autre ouverture de passage (19), **caractérisé en ce qu'**est installé au niveau de la poche de maniement (20) un élément d'aspiration (24), qui est raccordé ou peut être raccordé à un conduit d'évacuation par aspiration de gaz ou de poudre (26) sortant de la chambre de processus (9), dans laquelle est installée, au niveau de l'autre poche de maniement (22), au moins une buse de soufflage (32) raccordée ou pouvant être raccordée à un conduit d'amenée de gaz (34), servant à introduire par soufflage du gaz sous pression dans la chambre de processus (9).

2. Machine selon la revendication 1, dans laquelle le conduit d'évacuation par aspiration de gaz et de poudre (26) comprend un tuyau flexible souple installé de manière à s'étendre dans ou au niveau de la poche de maniement (20), dans laquelle l'agencement est mis en oeuvre de telle manière que le tuyau flexible peut être saisi par une main (23) d'un opérateur introduite depuis l'extérieur dans la poche de maniement (20) et peut être déplacé dans la chambre de processus (9) afin de guider l'élément d'aspiration de poudre (24) en direction d'autres emplacements dans la chambre de processus (9).

3. Machine selon la revendication 1, dans laquelle le conduit d'amenée de gaz (34) comprend un autre tuyau flexible souple installé de manière à s'étendre au niveau de l'autre poche de maniement (22), dans laquelle l'agencement est mis en oeuvre de telle manière que l'autre tuyau flexible peut être saisi par une main (28) d'un opérateur introduite depuis l'extérieur dans l'autre poche de maniement et peut être déplacé dans la chambre de processus (9) afin de guider la buse de soufflage (32) vers d'autres emplacements dans la chambre de processus (9).

4. Machine selon l'une quelconque des revendications précédentes, dans laquelle un outil de désagrégation de poudre mécanique est installé au niveau de l'autre poche de maniement côté chambre de processus.

5. Machine selon l'une quelconque des revendications précédentes, dans laquelle le conduit d'évacuation par aspiration de gaz et de poudre (26) et le conduit d'amenée de gaz (34) sont des éléments d'un circuit de refoulement, qui présente au moins une pompe de refoulement et un système de séparation de poudre servant à séparer des poudres de matériau hors du circuit de refoulement.

6. Machine selon la revendication 5, dans laquelle un gaz protecteur, de préférence un gaz protecteur contenant de l'argon est prévu en tant que gaz dans le circuit de refoulement et dans la chambre de processus.
